Europäisches Patentamt

European Patent Office

Office européen des brevets

(11) Publication number: **0 246 029 B1**

## EUROPEAN PATENT SPECIFICATION

(45) Date of publication of patent specification: **24.06.92**  (51) Int. Cl.⁵: **G01N  17/00**, C23F 13/00

(21) Application number: **87304065.3**

(22) Date of filing: **07.05.87**

(54) **A system for controlling corrosion by thin layers of corrosive fluids.**

(30) Priority: **16.05.86 US 863736**

(43) Date of publication of application:
**19.11.87 Bulletin  87/47**

(45) Publication of the grant of the patent:
**24.06.92 Bulletin  92/26**

(84) Designated Contracting States:
**AT DE GB NL**

(56) References cited:
**FR-A- 2 293 234**

(73) Proprietor: **ELECTRIC POWER RESEARCH IN-STITUTE, INC**
**3412 Hillview Avenue**
**Palo Alto California 94303(US)**

(72) Inventor: **Syrett, Barry Christopher**
**1881 Fulton Street**
**Palo Alto California 94303(US)**
Inventor: **Koch, Gerhardus H.**
**2160 Shoreham Road**
**Colombus Ohio 43220(US)**
Inventor: **Thompson, Neil G.**
**489 Spirowood Street**
**Colombus Ohio 43220(US)**

(74) Representative: **Jackson, David Spence et al**
**REDDIE & GROSE 16, Theobalds Road**
**London, WC1X 8PL(GB)**

## Description

The present invention relates to apparatus for preventing corrosion of a metallic surface exposed to a corrosive fluid, the apparatus being of the type comprising a counterelectrode located adjacent to and in contact with the corrosive fluid, and an electrochemical potential control means connected in circuit with said counterelectrode and said surface for maintaining the potential of said surface at a predetermined value by passing a current between said counterelectrode and said surface through the corrosive fluid.

There are frequent instances where a metallic surface is exposed to a thin layer of a corrosive fluid. For example, the flue gas from a fossil-fueled boiler or combustor contains acidic gases such as sulfur dioxide ($SO_2$), sulfur trioxide ($SO_3$) and oxides of nitrogen ($NO_x$). On its way to the stack, heat is extracted from the flue gas by in-line heat exchangers, such as superheaters, reheaters, and economizers. In addition, heat is lost through the walls of both the ductwork leading to the stack and the stack itself. If the power plant utilizes a flue gas desulfurization (FGD) system, such as a lime or limestone scrubber, additional heat is extracted from the flue gas.

At some point in its journey from the boiler to the top of the stack, the flue gas often cools sufficiently such that its temperature drops below the dewpoint of one or more of the component gases. When this occurs, condensates are deposited on the internal metallic surfaces of the duct or stack. These condensates may contain high levels of halide ions and can be very acidic. In plants without FGD systems, condensates may contain sulfuric acid at concentrations greater than 50% by weight. Even when FGD systems are utilized, it is not uncommon for the pH of condensates in the outlet duct to be less than two.

These condensates are therefore highly corrosive toward materials, such as metals or alloys, used to construct ducts and stacks. A number of systems for preventing or minimizing the corrosion of such metallic surfaces have been considered. Such systems include covering the metallic surfaces with organic or ceramic coatings or linings; using more highly alloyed, more corrosion-resistant alloys; using nonmetallic materials of construction; and reheating the flue gas so that its temperature exceeds the dewpoint. None of these systems, however, have been universally successful and all have certain disadvantages.

The present invention is directed to a system that can be utilized to prevent the corrosion of metallic surfaces by controlling the electrochemical potential of such surfaces. Control of the electrochemical potential of a metal or alloy is a well established approach to controlling corrosion. For instance, cathodic protection of a metallic surface is possible by passing a current from a suitable electrode through the corrosive liquid environment to the structure to be protected such that the electrochemical potential of the structure is depressed to a more negative (or less positive) value. Normally, the potential of the cathodically protected surface is within, or close to, the "immune" range of potentials, a range in which the metallic surface is thermodynamically stable in the environment of interest.

Corrosion of metals which experience an active/passive transition may also be controlled in some environments by anodic protection. In cases where the alloy corrodes in the active state at the open circuit potential, a current is passed from a suitable electrode to the surface to be protected so that the potential of the surface is raised from this active potential to a passive potential where a thin, adherent, surface film forms to protect the metal from further corrosion.

In cases where the open-circuit potential of the alloy is within the passive range of potentials but where pitting is a problem, control of the electrochemical potential can again be useful. Here, the metal is cathodically polarized only slightly so that the potential is depressed to the low (most negative) end of the passive range of potentials. In this way, the surface of a metal or alloy is maintained in the passive state while preventing the potential from exceeding the critical pitting potential. Similarly, other forms of corrosion, such as stress corrosion cracking and corrosion fatigue, can often be prevented by controlling the electrochemical potential of the metallic surface.

Corrosion prevention by potential control is a well established technology. For instance, U.S. Patent Nos. 3,216,916, issued November 9, 1965, and 3,409,530, issued November 5, 1968, disclose systems that may be utilized to prevent corrosion by controlling the electrochemical potential of a metallic surface. Potential control of corrosion, however, has never been applied to ducts, stacks or other metallic surfaces where the corrodent is a thin fluid film, such as a surface condensate, rather than a bulk liquid. The difficulty in applying this approach to metallic surfaces has been in devising a system of uniformly distributing the polarizing current from a separate electrode to the metallic surface through the thin film layer.

Accordingly, an object of the present invention is to provide a system of uniformly distributing the current from an electrode, through a thin fluid film layer, to the metallic surface to be protected.

Another object of the present invention is to provide a simple and economic system for controlling corrosion of a metallic surface exposed to a thin film of corrosive fluid.

According to the present invention, apparatus of the type defined hereinbefore at the beginning is characterised in that an absorbent material is disposed on said surface for absorbing the corrosive fluid, and the counterelectrode is so located adjacent to and in contact with the absorbent material that the said current passes through the corrosive fluid absorbed by the absorbent material.

The invention also provides a method for preventing corrosion of a metallic surface by a corrosive fluid, comprising the step of maintaining the potential of the said surface at a predetermined value by passing a current between a counterelectrode, located in contact with the corrosive fluid, and the said surface through the said corrosive fluid, characterised in that the said corrosive fluid is absorbed by a layer of absorbent material applied to the said surface.

In a preferred embodiment, the counterelectrode is located either within or adjacent to and in contact with the absorbent material. The potential of the metallic surface is controlled by passing a current between the counterelectrode and the metallic surface through the corrosive fluid in the absorbent material. A reference electrode is included for more precise control of the potential. The absorbent material in addition to absorbing the corrosive fluid must be resistant to the environment in which it is utilized.

The system of the present invention will be described in more detail hereinafter in conjunction with the drawings wherein:

Figure 1 is a schematic view illustrating the present invention utilized in a circular duct;

Figure 2 is a schematic, sectional view through the duct illustrating a possible arrangement of the system of the present invention; and

Figure 3 is a schematic view, partly in section, illustrating the present invention utilized in a rectangular duct.

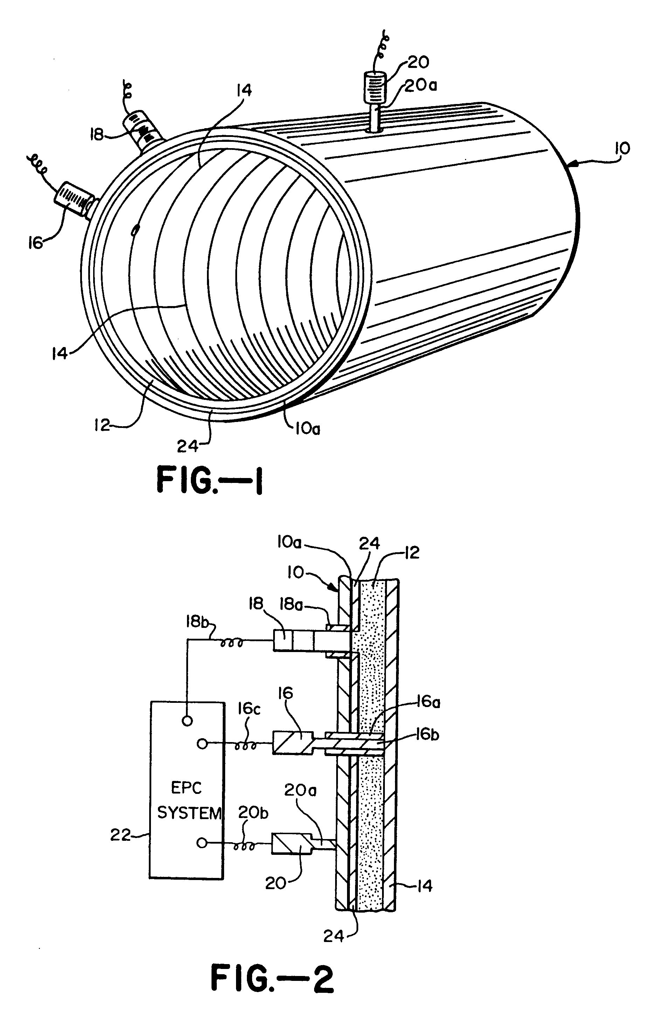

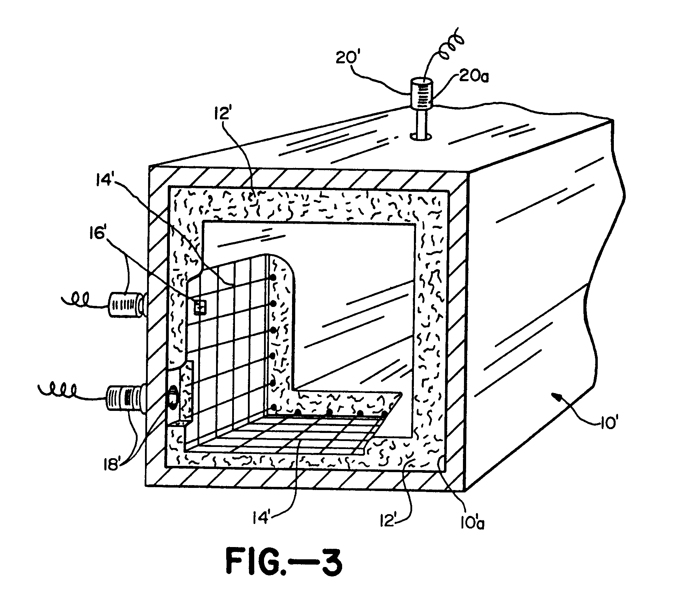

Referring now to the drawings, attention is directed to Figures 1 and 2. These figures illustrate a metallic duct 10 that, in the absence of the system of the present invention, would be exposed to a thin film of corrosive fluid such as a corrosive condensate. The interior metallic surface 10a of the duct thus must be protected from corrosion.

As shown, the duct 10 is lined along its interior surface with an absorbent material 12 so that condensates which would otherwise form on the interior surface are absorbed by absorbent lining 12. The lining 12 must be resistant to the environment in which it is utilized. Specifically, it must satisfactorily resist chemical attack by the condensates it absorbs. The lining should also not detrimentally interact with the interior surface of duct 10.

The absorbent lining 12 is positioned by any appropriate means, such as by chemical bonding and mechanical fixation devices, in close contact with the interior surface of duct 10 (or, as described later, a non-conductive coating, 24) so that the interior surface is wetted by any condensates absorbed by lining 12. In the outlet duct of a sulfur dioxide scrubber in a fossil-fueled power plant, absorbent lining 12 may be a cementitious material such as Pennwalt Tufchem™ concrete manufactured by the Pennwalt Corporation of Delaware, Ohio. Alternatively, it may be possible to fabricate absorbent lining 12 from a porous organic plastic material.

The system of the present invention further includes a counterelectrode 14 placed in intimate contact with the surface of absorbent lining 12. By way of example, the counterelectrode 14 is shown as a spirally-wound wire or rod. Other geometries, however, are possible and may be more appropriate depending on the particular configuration of the surface to be protected. For instance, a duct may have a square or rectangular cross-section (See Figure 3), requiring that the counterelectrode be constructed to correspond to such geometries. The counterelectrode could also comprise a conducting fabric.

It may be also necessary to embed counterelectrode 14 into the surface of absorbent lining 12 (See Figure 3). This would be the case if the temperature gradient through lining 12 is high enough such that the lining is wet near the duct wall 10a but dry at the surface contacting the gas or other corrosive fluid passing through the duct. Embedding counterelectrode 14 into the absorbent lining 12 may also be a convenient method of providing structural support to the counterelectrode.

At intervals along the length of the duct, the duct is penetrated to make external connections to counterelectrode 14. Such connections, indicated generally by reference numeral 16, are electrically-isolated from the duct wall and lining 12. The electrical connection 16 may comprise a tubular sleeve 16a through which is extended an electrically-conductive stud or bolt 16b. The tubular sleeve 16a extends through the duct wall and the absorbent lining. Sleeve 16a is fabricated from an electrically-insulating material such as Telfon manufactured by E. I. DuPont de Nemours Co. The electrically-conductive member 16b is appropriately positioned in sleeve 16a to be in contact with counterelectrode 14 so that a conductive path is formed therebetween. The electrical connection 16 further includes an electrical lead 16c that connects the counterelectrode 14 in an electrical circuit with the electrical potential control ("EPC") system 22. The electrical lead 16c may extend through a suitable conduit (not illustrated). If appropriate, electrical connection 16 may be enclosed within a weathertight or gas-tight housing (also not illustrated).

The system of the present invention may also include a reference electrode 18. Reference electrode 18 may be positioned at intervals along the length of the duct 10 at, or close to, the interface between lining 12 and the interior surface 10a of duct 10. The reference electrode is connected in circuit with the EPC system 22, and is electrically isolated from duct 10. To this end, reference electrode 18 may extend through a tubular, electrically-insulating sleeve 18a to be in electrolytic contact with lining 12. An electrical lead 18b is provided to connect the reference electrode to EPC system 22. The electrical lead 18b may extend through an appropriate conduit and that portion of reference electrode 18 exterior to duct 10, may be enclosed, if desired, within a weathertight or gas-tight housing. Neither the housing nor the conduit are illustrated.

The duct 10 is connected in electrical circuit with EPC system 22 by means of duct electrical connection 20. Connection 20 may comprise an electrically-conductive stud or member 20a disposed in electrically-conducting contact with the exterior wall of duct 10. An appropriate electrical lead 20b connects member 20a, and thus duct 10, in circuit with EPC system 22.

The specific construction of the counterelectrode connection 16, the reference electrode 18 and the duct connection 20 would be readily apparent and well known to those of ordinary skill in the art, and hence the construction of these components are not illustrated nor described in any greater detail.

The EPC system 22 is capable of controlling the electrochemical potential of the duct wall surface. For instance, if cathodic polarization is required, EPC system 22 would comprise a conventional cathodic protection system. However, as discussed heretofore, a cathodic protection system is just one possible electrochemical potential control system that may be utilized within the context of the present invention.

The essential feature of EPC system 22 is that it is capable of passing current between the counterelectrode 14 and the duct wall (via duct connection 20) through the corrosive fluid absorbed in absorbent lining 12, thereby providing control of the electrochemical potential of the duct wall to prevent corrosion.

If reference electrode 18 is incorporated into the system, more precise control, as is well known in the art, of the electrochemical potential of the metallic surface of duct 10 is possible. The EPC system 22 measures the potential difference between the reference electrode and the duct surface, comparing that difference to a predetermined value. If the potential difference does not correspond to the predetermined or preset value, then the system automatically increases or decreases the current, as necessary, from counterelectrode 14 through the corrosive fluid in absorbent lining 12 to the surface of duct 10, until the measured potential difference between the reference electrode and the duct surface is equal to the preset value, i.e. the desired value for corrosion control.

The system of the present invention may be installed in stacks, ducts, or in any other areas that are exposed to corrosive condensates continuously or only intermittently. If absorbent lining 12 is dry, little or no current will flow from counterelectrode 14 to the duct wall, because the dry lining is either poorly conducting or non-conducting. However, under such conditions, corrosion protection is not required, since corrosion rates are negligibly low if the duct wall is dry.

The absorbent lining allows currents to be passed from the counterelectrode to the metallic surface requiring protection from corrosion. Without absorbent lining 12, it would be quite impractical, if not impossible, to pass such currents. The absorbent lining facilitates the required intimate contact between the counterelectrode and the corrosive fluid, while also eliminating the possibility of an electrical short-circuit between the counterelectrode and the metal surface being protected.

The system of the present invention may also include a non-conductive or poorly conducting coating 24 disposed between the interior wall of duct 10 and absorbent lining 12. The coating 24 is, however, not located at those locations along the duct where counterelectrode connections 16 or reference electrode connections 18 exist. This is necessary in order to provide the appropriate electrolytic and electrical circuit path for operation of the system. Coating 24 is a corrosion-resistant coating, but is subjected to lower temperatures and may experience a less corrosive environment than lining 12. Thus, coating 24 may be constructed from a broader range of materials. For example, it may be fabricated from a material such as an epoxy, that might not be resistant to direct attack by the duct environment. Coating 24 provides additional protection to duct 10. It also provides a more economical system as less current and power would be utilized, since current only passes from counterelectrode 14 to the interior surface of duct 10 at those points where there is a break (a "holiday") in the coating 24. Holidays can be small (e.g. pinholes created during application of the coating) or large (e.g. caused by mechanical damage) but they are usually present. Thus, in the absence of the EPC system, the coating 24 and absorbent lining 12 alone cannot offer complete protection from corrosion.

Figure 3 illustrates the present invention utilized in a rectangular duct 10' with counterelectrode 14' embedded in absorbent layer 12'. Counterelectrode 14' has a square-mesh geometry, and as discussed, electrical connection 16' is provided to make external connections to counterelectrode 14'. Reference electrode 18' is in electrolytic contact with lining 12', and electrical connection 20' connects duct 10' in electrical circuit with the EPC system.

The system of the present invention may be utilized in the outlet ducts and stacks of power plants. Additionally, the system may be utilized in various other situations where metallic surfaces are susceptible to corrosion by a thin surface layer of fluid. Such situations include those where the temperature of a gaseous environment drops below the dewpoint so that condensates form on the metallic surface to be protected. The system may also be utilized in splash zones often found at the junction between a liquid phase and a gas or vapor phase. For instance, the system of the present invention may be applied at the inlet of a sulfur dioxide scrubber where the limestone slurry may splash from the quench section into the inlet duct and cause severe corrosion. Similarly, the present invention may be used to protect structures partially immersed in corrosive fluids in cases where the fluid level continually or intermittently changes, for example in marine structures located in tidal zones. Here conventional protection systems would not provide adequate protection for surfaces that are wetted and are above the level of the bulk liquid.

Although certain specific embodiments of the invention have been described herein in detail, the invention is not to be limited only to such embodiments, but rather only by the appended claims.

## Claims

1. Apparatus for preventing corrosion of a metallic surface (10a) exposed to a corrosive fluid, the apparatus comprising a counterelectrode (14) located adjacent to and in contact with the corrosive fluid, and electrochemical potential control means (22) connected in circuit with said counterelectrode (14) and said surface (10a) for maintaining the potential of said surface (10a) at a predetermined value by passing a current between said counterelectrode (14) and said surface (10a) through the corrosive fluid, characterised in that an absorbent material (12) is disposed on said surface (10a) for absorbing the corrosive fluid, and the counterelectrode (14) is so located adjacent to and in contact with the absorbent material (12) that the said current passes through the corrosive fluid absorbed by the absorbent material (12).

2. Apparatus according to claim 1, characterised in that the absorbent material is in the form of an absorbent lining (12) applied to said surface (10a).

3. Apparatus according to claim 2, characterised by a reference electrode (18) in electrolytic contact with said lining (12) and electrically-insulated from said surface (10a) and said counterelectrode (14) except through corrosive condensate in said lining (12), and said electrochemical potential control means (22) also connected in electrical circuit with said reference electrode (18) for maintaining the potential of said surface (10a) at a predetermined value relative to said reference electrode (18).

4. Apparatus according to claim 3, characterised in that the reference electrode (18) is disposed at intervals along the length of said surface (10a).

5. Apparatus according to claim 1 or 2 or 3, characterised in that the counterelectrode (14') is embedded in said lining (12').

6. Apparatus according to claim 1 or 2 or 3, characterised by an electrically non-conductive or poorly conductive, corrosion-resistant coating (24) disposed between said surface (10a) and said lining (12).

7. Apparatus according to claim 2, characterised in that the lining (12) comprises a cementitious material.

8. A method for preventing corrosion of a metallic surface (10a) by a corrosive fluid, comprising the step of maintaining the potential of the said surface (10a) at a predetermined value by passing a current between a counterelectrode (14), located in contact with the corrosive fluid, and the said surface (10a), through the said corrosive fluid, characterised in that the said corrosive fluid is absorbed by a layer (12) of absorbent material applied to the said surface (10a).

9. A method according to claim 8, characterised by maintaining said potential at a predetermined value relative to a reference electrode (18) in electrolytic contact with said lining (12) and electrically-isolated from said surface (10a) and said counterelectrode (14) except through the corrosive fluid in said absorbent material (12).

10. An apparatus for preventing corrosion of a metallic surface (10a) in a corrosive environment including:

an electrode (14), having the function of being a counterelectrode with respect to the metallic surface (10a), spaced from said metallic surface (10a) and positioned in contact with said environment; and

electrochemical potential control means (22) connected in an electrical circuit between said counterelectrode (14) and said metallic surface (10a) for maintaing an electric potential upon said metallic surface (10a) sufficient to effect cathodic protection of said metallic surface (10a) by passing a current from said counterelectrode (14) to said metallic surface (10a), characterised in that a corrosive condensate with a low pH tends to form on surfaces exposed to the environment, an absorbent lining (12) capable of absorbing the corrosive condensate and resistant to the corrosive effects of the corrosive condensate is provided on said metallic surface (10a) on the side of said surface (10a) facing the environment, said lining (12) being formed from a concrete material that has a chemical resistance to a low pH; and the said current passes through corrosive condensate absorbed by said absorbent lining (12).

11. Apparatus according to claim 10, characterised by an electrically non-conductive, corrosion-resistant coating (24) disposed between said metallic surface (10a) and said lining (12) which coating (24) has breaks that permit the passage of a current therethrough.

12. Apparatus according to claim 10, characterised by:

a reference electrode (18) in electrolytic contact with said lining (12) and electrically-isolated from said metallic surface (10a) and from said counterelectrode (14) except through the corrosive condensate in said lining (12); and by

said electrochemical potential control means (22) being connected in electrical circuit with said counterelectrode (14), said reference electrode (18) and said metallic surface (10a) for maintaining the potential of said metallic surface (10a) at a predetermined cathodic protection value with respect to said reference electrode (18).

13. Apparatus according to claims 10, 11 or 12, characterised in that the apparatus is provided in the form of a flue gas duct or stack and in that the metallic surface (10a) is an interior facing surface of metal forming the duct or stack.

14. A method for a cathodic protection in a corrosive environment in which corrosion of a metallic surface would occur in the absence of said method, comprising:

inducing an electrochemical potential between said metallic surface (10a) and the corrosive environment sufficient to effect cathodic protection of the metallic surface (10a), characterised by

applying to the side of the metallic surface (10a) facing the corrosive environment a layer (12) of an acid resistant concrete that has a chemical resistance to a low pH and permits cathodic protection, the said environment comprising a low pH corrosive condensate; and

absorbing the corrosive condensate in said layer (12) of acid resistant concrete, the said electrochemical potential being induced through the absorbed condensate in said layer (12).

15. A method according to claim 14, characterised in that the electrochemical potential induced is maintained at a predetermined value controlled by a reference electrode (18).

16. A method according to claim 14 or 15 characterised in that the low pH environment is the interior environment of a flue gas duct or stack and in that the layer of an acid resistant concrete is applied to the interior facing surface (10a) of the duct or stack.

**Revendications**

1. Appareil pour empêcher la corrosion d'une surface métallique (10a) exposée à un fluide corrosif, l'appareil comportant une contre-électrode (14) placée à proximité immédiate du fluide corrosif et en contact avec lui, et des moyens (22) de réglage de potentiel électrochimique connectés en circuit avec ladite contre-électrode (14) et ladite surface (10a) pour maintenir le potentiel de ladite surface (10a) à une valeur prédéterminée en faisant passer un courant entre ladite contre-électrode (14) et ladite surface (10a) à travers le fluide corrosif, caractérisé en ce qu'une matière absorbante (12) est disposée sur ladite surface (10a) pour absorber le fluide corrosif, et la contre-électrode (14) est placée de telle manière, à proximité immédiate de la matière absorbante (12) et en contact avec elle, que ledit courant passe à travers le fluide corrosif absorbé par la matière absorbante (12).

**2.** Appareil selon la revendication 1, caractérisé en ce que la matière absorbante se présente sous la forme d'un garnissage absorbant (12) appliqué à ladite surface (10a).

**3.** Appareil selon la revendication 2, caractérisé par une électrode de référence (18) en contact électrolytique avec ledit garnissage (12) et isolée électriquement de ladite surface (10a) et de ladite contre-électrode (14) sauf par l'intermédiaire d'un condensat corrosif dans ledit garnissage (12), et lesdits moyens (22) de réglage de potentiel électrochimique également connectés en circuit électrique avec ladite électrode de référence (18) pour maintenir le potentiel de ladite surface (10a) à une valeur prédéterminée par rapport à ladite électrode de référence (18).

**4.** Appareil selon la revendication 3, caractérisé en ce que l'électrode de référence (18) est disposée à intervalles sur la longueur de ladite surface (10a).

**5.** Appareil selon la revendication 1, 2 ou 3, caractérisé en ce que la contre-électrode (14') est noyée dans ledit garnissage (12').

**6.** Appareil selon la revendication 1, 2 ou 3, caractérisé par un revêtement résistant à la corrosion, électriquement non conducteur ou faiblement conducteur (24), disposé entre ladite surface (10a) et ledit garnissage (12).

**7.** Appareil selon la revendication 2, caractérisé en ce que le garnissage (12) comprend une matière contenant du ciment.

**8.** Procédé pour empêcher la corrosion d'une surface métallique (10a) par un fluide corrosif, comprenant l'étape qui consiste à maintenir le potentiel de ladite surface (10a) à une valeur prédéterminée en faisant passer un courant entre une contre-électrode (14), placée en contact avec le fluide corrosif, et ladite surface (10a), à travers ledit fluide corrosif, caractérisé en ce que ledit fluide corrosif est absorbé par une couche (12) de matière absorbante appliquée sur ladite surface (10a).

**9.** Procédé selon la revendication 8, caractérisé en ce qu'il consiste à maintenir ledit potentiel à une valeur prédéterminée par rapport à une électrode de référence (18) en contact électrolytique avec ledit garnissage (12) et isolée électriquement de ladite surface (10a) et de ladite contre-électrode (14) sauf à travers le fluide corrosif dans ladite matière absorbante (12).

**10.** Appareil pour empêcher la corrosion d'une surface métallique (10a) dans un environnement corrosif, comprenant :

une électrode (14), ayant la fonction d'une contre-électrode par rapport à la surface métallique (10a), espacée de ladite surface métallique (10a) et positionnée en contact avec ledit environnement ; et

des moyens (22) de réglage de potentiel électrochimique connectés dans un circuit électrique entre ladite contre-électrode (14) et ladite surface métallique (10a) pour maintenir un potentiel électrique sur ladite surface métallique (10a) suffisant pour effectuer une protection cathodique de ladite surface métallique (10a) en faisant passer un courant de ladite contre-électrode (14) à ladite surface métallique (10a), caractérisé en ce qu'un condensat corrosif à faible pH tend à se former sur des surfaces exposées à l'environnement, un garnissage absorbant (12) capable d'absorber le condensat corrosif et résistant aux effets corrosifs du condensat corrosif est prévu sur ladite surface métallique (10a), sur le côté de ladite surface (10a) faisant face à l'environnement, ledit garnissage (12) étant formé d'une matière du type béton qui présente une résistance chimique à un faible pH ; et ledit courant passe à travers le condensat corrosif absorbé par ledit garnissage absorbant (12).

**11.** Appareil selon la revendication 10, caractérisé par un revêtement résistant à la corrosion, électriquement non conducteur (24), disposé entre ladite surface métallique (10a) et ledit garnissage (12), lequel revêtement (24) présente des brèches qui permettent le passage d'un courant à travers lui.

**12.** Appareil selon la revendication 10, caractérisé par :

une électrode de référence (18) en contact électrolytique avec ledit garnissage (12) et isolée électriquement de ladite surface métallique (10a) et de ladite contre-électrode (14) sauf à travers le condensat corrosif dans ledit garnissage (12) ; et par

lesdits moyens (22) de réglage de potentiel électrochimique étant connectés en circuit électrique avec la contre-électrode (14), ladite électrode de référence (18) et ladite surface métallique (10a) pour maintenir le potentiel de ladite surface métallique (10a) à une valeur prédéterminée de protection cathodique par rapport à ladite électrode de référence (18).

13. Appareil selon l'une des revendications 10, 11 et 12, caractérisé en ce que l'appareil est prévu sous la forme d'une gaine ou d'une cheminée de gaz de fumée et en ce que la surface métallique (10a) est une surface tournée vers l'intérieur d'un métal formant la gaine ou la cheminée.

14. Procédé pour une protection cathodique dans un environnement corrosif dans lequel la corrosion d'une surface métallique aurait lieu en l'absence dudit procédé, consistant :

à induire un potentiel électrochimique entre ladite surface métallique (10a) et l'environnement corrosif, suffisant pour effectuer une protection cathodique de la surface métallique (10a), caractérisé en ce qu'il consiste

à appliquer au côté de la surface métallique (10a) faisant face à l'environnement corrosif une couche (12) d'un béton résistant aux acides, qui présente une résistance chimique à un faible pH et qui permet une protection cathodique, ledit environnement comprenant un condensat corrosif à faible pH ; et

à absorber le condensat corrosif dans ladite couche (12) de béton résistant aux acides, ledit potentiel électrochimique étant induit à travers le condensat absorbé dans ladite couche (12).

15. Procédé selon la revendication 14, caractérisé en ce que le potentiel électrochimique induit est maintenu à une valeur prédéterminée régulée par une électrode de référence (18).

16. Procédé selon la revendication 14 ou 15, caractérisé en ce que l'environnement à faible pH est l'environnement intérieur d'une gaine ou d'une cheminée à gaz de fumée et en ce que la couche d'un béton résistant aux acides est appliquée sur la surface (10a), tournée vers l'intérieur, de la gaine ou de la cheminée.

**Patentansprüche**

1. Vorrichtung zum Verhindern der Korrosion einer einem korrosiven Fluid ausgesetzten metallischen Oberfläche (10a), mit einer angrenzend an und in Kontakt mit dem korrosiven Fluid angeordneten Gegenelektrode (14) und einer Einrichtung (22) zur Steuerung des elektrochemischen Potentials, die mit der Gegenelektrode (14) und der Oberfläche (10a) elektrisch verbunden ist und das Potential der Oberfläche (10a) auf einem vorbestimmten Wert hält, indem ein Strom zwischen der Gegenelektrode (14) und der Oberfläche (10a) durch das korrosive Fluid geleitet wird, dadurch **gekennzeichnet,** daß auf der Oberfläche (10a) ein absorbierendes Material (12) zum Absorbieren des korrosiven Fluids angeordnet ist, und daß die Gegenelektrode (14) so angrenzend an und in Kontakt mit dem absorbierenden Material (12) angeordnet ist, daß der Strom durch das vom absorbierenden Material (12) absorbierte korrosive Fluid fließt.

2. Vorrichtung nach Anspruch 1, dadurch gekennzeichnet, daß das absorbierende Material als auf die Oberfläche (10a) aufgebrachte absorbierende Auskleidung (12) ausgebildet ist.

3. Vorrichtung nach Anspruch 2, gekennzeichnet durch eine mit der Auskleidung (12) in elektrolytischem Kontakt stehende Bezugselektrode (18), die von der Oberfläche (10a) und der Gegenelektrode (14) außer durch korrosives Kondensat in der Auskleidung (12) elektrisch isoliert ist, wobei die Einrichtung (22) zur Steuerung des elektrochemischen Potentials auch mit der Bezugselektrode (18) elektrisch verbunden ist, so daß das Potential der Oberfläche (10a) gegenüber der Bezugselektrode (18) auf einem vorbestimmten Wert gehalten wird.

4. Vorrichtung nach Anspruch 3, dadurch gekennzeichnet, daß die Bezugselektrode (18) längs der Länge der Oberfläche (10a) in Abständen angeordnet ist.

5. Vorrichtung nach Anspruch 1, 2 oder 3, dadurch gekennzeichnet, daß die Gegenelektrode (14') in die Auskleidung (12') eingebettet ist.

6. Vorrichtung nach Anspruch 1, 2 oder 3, gekennzeichnet durch eine elektrisch nicht oder schlecht leitfähige korrosionsbeständige Beschichtung (24), die zwischen der Oberfläche (10a) und der Auskleidung (12) angeordnet ist.

7. Vorrichtung nach Anspruch 2, dadurch gekennzeichnet, daß die Auskleidung (12) ein zementitartiges Material enthält.

8. Verfahren zum Verhindern der Korrosion einer metallischen Oberfläche (10a) durch ein korrosives Fluid, bei dem das Potential der Oberfläche (10a) auf einem vorbestimmten Wert gehalten wird, indem zwischen einer in Kontakt mit dem korrisiven Fluid angeordneten Gegenelektrode (14) und der Oberfläche (10a) ein Strom durch das korrosive Fluid geleitet wird, dadurch **gekennzeichnet,** daß das korrosive Fluid durch eine Schicht (12) aus absorbierendem Material absorbiert wird, die auf die Oberfläche (10a) aufgebracht ist.

9. Verfahren nach Anspruch 8, dadurch gekennzeichnet, daß das Potential gegenüber einer Bezugselektrode (18) auf einem vorbestimmten Wert gehalten wird, die mit der Auskleidung (12) in elektrolytischem Kontakt steht und von der Oberfläche (10a) und der Gegenelektrode (14) außer durch das korrosive Fluid im absorbierenden Material (12) elektrisch isoliert ist.

10. Vorrichtung zum Verhindern der Korrosion einer metallischen Oberfläche (10a) in einer korrosiven Umgebung, mit:
   einer Elektrode (14), die gegenüber der metallischen Oberfläche (10a) als Gegenelektrode dient, in einem Abstand von der metallischen Oberfläche (10a) und in Kontakt mit der Umgebung angeordnet ist, und
   einer Einrichtung (22) zur Steuerung des elektrochemischen Potentials, die elektrisch zwischen die Gegenelektrode (14) und die metallische Oberfläche (10a) geschaltet ist, um auf der metallischen Oberfläche (10a) ein für einen kathodischen Schutz der metallischen Oberfläche (10a) ausreichendes Potential derselben aufrechtzuerhalten, indem von der Gegenelektrode (14) zur metallischen Oberfläche (10a) ein Strom geleitet wird, dadurch **gekennzeichnet,** daß ein korrosives Kondensat mit niedrigem pH-Wert dazu neigt, sich auf der Umgebung ausgesetzten Oberflächen abzusetzen, daß eine absorbierende Auskleidung (12), die geeignet ist, das korrosive Kondensat zu absorbieren und die gegenüber den korrosiven Einwirkungen des korrosiven Kondensats resistent ist, auf der metallischen Oberfläche (10a) auf der Seite der der Umgebung zugewandten Oberfläche (10a) vorgesehen ist, wobei die Auskleidung (12) von einem Beton-Material gebildet ist, das gegenüber einem niedrigen pH-Wert chemisch resistent ist, und daß der Strom durch das von der absorbierenden Auskleidung (12) absorbierte korrosive Kondensat geleitet wird.

11. Vorrichtung nach Anspruch 10, gekennzeichnet durch eine elektrisch nicht leitfähige, korrosionsbeständige Beschichtung (24), die zwischen der metallischen Oberfläche (10a) und der Auskleidung (12) angeordnet ist, wobei die Beschichtung (24) Unterbrechungen aufweist, die einen Stromfluß durch dieselben gestatten.

12. Vorrichtung nach Anspruch 10, gekennzeichnet durch eine mit der Auskleidung (12) in elektrolytischem Kontakt stehende Bezugselektrode (18), die von der metallischen Oberfläche (10a) und der Gegenelektrode (14) außer durch das korrosive Kondensat in der Auskleidung (12) elektrisch isoliert ist; und dadurch, daß
die Einrichtung (22) zur Steuerung des elektrochemischen Potentials auch mit der Gegenelektrode (14), der Bezugselektrode (18) und der metallischen Oberfläche (10a) elektrisch verbunden ist, so daß das Potential der metallischen Oberfläche (10a) gegenüber der Bezugselektrode (18) auf einem vorbestimmten kathodischen Schutzwert gehalten wird.

13. Vorrichtung nach Anspruch 10, 11 oder 12, dadurch gekennzeichnet, daß die Vorrichtung in Form eines Abgaskanals oder -schachts ausgebildet ist, und daß die metallische Oberfläche (10a) eine dem Innern zugewandte Metallfläche ist, die den Kanal oder Schacht bildet.

14. Verfahren zum kathodischen Schützen in einer korrosiven Umgebung, in der ohne Anwendung des Verfahrens eine metallische Oberfläche korrodieren würde, bei dem zwischen der metallischen Oberfläche (10a) und der korrosiven Umgebung ein elektrochemisches Potential induziert wird, das ausreichend ist, einen kathodischen Schutz der metallischen Oberfläche (10a) zu bewirken, dadurch **gekennzeichnet,** daß
auf die der korrosiven Umgebung zugewandte Seite der metallischen Oberfläche (10a) eine Schicht (12) aus säurebeständigem Beton aufgebracht wird, der gegenüber einem niedrigen pH-Wert chemisch beständig ist und einen kathodischen Schutz erlaubt, wobei die Umgebung ein korrosives Kondensat mit niedrigem pH-Wert aufweist, und
das korrosive Kondensat in der Schicht (12) aus säurebeständigem Beton absorbiert wird, wobei das elektrochemische Potential durch das absorbierte Kondensat in der Schicht (12) induziert wird.

15. Verfahren nach Anspruch 14, dadurch gekennzeichnet, daß das induzierte elektrochemische Potential auf einem von einer Bezugselektrode (18) gesteuerten vorbestimmten Wert gehalten wird.

16. Verfahren nach Anspruch 14 oder 15, dadurch gekennzeichnet, daß die Umgebung mit niedrigem pH-Wert das Innere eines Abgaskanals oder -schachts ist, und daß die Schicht aus säurebeständigem Beton auf die dem Innern zugewandte Oberfläche (10a) des Kanals oder Schachts aufgebracht ist.

FIG.—1

FIG.—2

10

FIG.—3